# EUROPEAN PATENT APPLICATION

(11) **EP 4 424 987 A1**
(43) Date of publication of application: **04.09.2024**
(21) Application number: 23159840.0
(22) Date of filing: 03.03.2023
(51) Int. Cl.: F03D 7/02

(54) **WIND TURBINE OPERATION IN ASYMMETRIC FLOW**

(71) Applicant: Siemens Gamesa Renewable Energy A/S, 7330 Brande (DK)
(72) Inventor: Enevoldsen, Peder Bay, 7100 Vejle (DK); Gonzalez, Alejandro Gomez, 8000 Aarhus (DK); Poulsen, Steffen Frydendal, 7120 Vejle (DK)
(74) Representative: SGRE-Association

(57) **Abstract**

A method of operating a wind turbine, wherein the wind turbine comprises a rotor (101) with two or more rotor blades (10). The method comprises detecting a load asymmetry of a load acting on the rotor (101), the load being caused by a flow of air to which the rotor (101) is exposed. It further comprises reducing the load asymmetry by controlling an active aerodynamic device (20), wherein the active aerodynamic device (20) is provided on a rotor blade (10) of the rotor (101), and wherein the active aerodynamic device (20) is controlled to change, based on the detected load asymmetry, an aerodynamic load applied to the rotor blade (10) by the flow of air to counteract the load asymmetry.

## Description

### FIELD OF THE INVENTION

The present invention relates to a method of operating a wind turbine, wherein the wind turbine comprises a rotor with two or more rotor blades. It further relates to a control system for controlling the operation of a wind turbine and to a respective wind turbine comprising such control system.

### BACKGROUND

Wind turbines are designed to withstand a variety of wind events. Such events may be described in a "design load case" (DLC) for the wind turbine, which may cover a variety of possible operating situations of wind turbines throughout its lifetime and which ensures that the loads resulting from these situations are within the design load envelope of the wind turbine. In particular for offshore wind parks, wind turbines may strongly interact with each other, as they may be positioned in the wake of upstream turbines in many operational situations. Interaction with the wake of upstream turbines may result in extreme and fatigue loads. For example, additional loading may be due to an additional level of turbulence, due to the wake, or due to the asymmetry of the flow when operating in partial wake. Partial wake is in particular a state in which only a portion of the wind turbine rotor is covered by the wake of an upstream wind turbine. In this wake region, the turbulence of the flow is larger and the wind velocity is lower.

The wake may further oscillate sideways, the so-called wake meandering, so that parts of the rotor may be exposed to the wake periodically. Further effects that may cause flow asymmetry on the wind turbine rotor may include a high flow shear, for example in the case of stable atmospheric boundary layers, i.e. in a situation in which there is little mixing in horizontal layers of the atmosphere so that relatively high differences in flow velocity result at the top and the bottom of the rotor plane. Flow asymmetry may further be caused by low level jets (LLJs), inversion of the shear profile of the atmosphere and interaction of the wind turbine with atmospheric gravitational wakes. Such flow asymmetry may cause a significant loading of the wind turbine, and in particular of offshore wind turbines of a wind park.

To reduce the loading on the wind turbine rotor, it is known to use an individual pitch control of the rotor blades, so that each blade is pitched individually to counteract the asymmetry of the loading. Such solution however suffers from the drawback that it requires a large amount of pitch activity, and further results in a high loading of the root section of the blade. Such high pitch activity in combination with the high loading on the bearing may result in an increased risk of pitch bearing damage, which will result in increased downtime and increased costs due to lower mean time to failure of the components of the pitch system. Such cyclic activation of the pitch mechanism may thus not be an efficient solution.

Another approach to reduce the operation in partial wake is the attempt to steer the wake caused by upstream wind turbines, for example by changing the yaw angle of the upstream wind turbine. Such wake steering may however cause higher loads being experienced by the upstream wind turbine, and may further result in a lower performance of the upstream wind turbine. The wake steering may further not result in the desired effect, since the upstream wind turbine generally has no information about the dynamics of the wake behind it, and thus whether the steering is functioning properly. Similarly, in other situations such as flow shear or low level jets, there is not sufficient information available about the flow field and no solutions exist to reduce the fatigue damage caused by such asymmetric flow.

The operating conditions to which wind turbines are exposed may thus result in an increased loading of the wind turbine and thus in an increased fatigue damage and a lower lifetime. It is desirable to avoid these negative effects.

### SUMMARY

Accordingly, there is a need to mitigate at least some of the drawbacks mentioned above. In particular, there is a need to reduce the fatigue loading of a wind turbine.

This need is met by the features of the independent claims. The dependent claims describe embodiments of the invention.

According to an embodiment of the invention, a method of operating a wind turbine is provided, wherein the wind turbine comprises a rotor with two or more rotor blades. The method comprises detecting a load asymmetry of a load acting on the rotor, the load being caused by a flow of air to which the rotor is exposed, and reducing the load asymmetry by controlling an active aerodynamic device. The active aerodynamic device is provided on a rotor blade of the rotor (preferably on each rotor blade of the rotor). The active aerodynamic device is controlled to change, based on the detected load asymmetry, an aerodynamic load applied to the rotor blade by the flow of air to counteract the load asymmetry.

Accordingly, by changing the aerodynamic load that is applied to an individual blade by means of the active aerodynamic device (AAD), it may become possible to efficiently compensate the detected load asymmetry. By detecting the load asymmetry, information is made available regarding how the AAD is to be controlled. The AAD can thus be operated at the correct azimuthal positions of the rotor blade on which the AAD is provided, so that the load on this blade can be changed by the control to thereby efficiently reduce the load asymmetry. By reducing the load asymmetry on the rotor, a periodic loading of the rotor may be avoided. Due to the rotation of the rotor, flow asymmetries caused by a partial wake, flow shear and other of the above-mentioned effects may cause a 1P loading (loading with the frequency of rotation) on the rotor blade and a 3P loading (loading with three times the frequency of rotation) on the rotor shaft, support and the like (for a rotor with three blades). Such periodic loading may cause significant fatigue damage. By reducing the load asymmetry in accordance with the present solution, such fatigue load may be avoided, and fatigue damage may thereby be reduced. The lifetime of the wind turbine may thereby be increased.

Surprisingly, it has been found that by means of controlling such active aerodynamic device, it is possible to significantly reduce the load asymmetry while substantially maintaining the efficiency of electrical power generation. For example, the AAD may reduce the aerodynamic load on the blade (for example lift) for part of the rotation cycle and may increase the aerodynamic load on the blade (e.g. by increasing lift) for another part of the rotation cycle. It has been found that such lift increase and decrease can be achieved without significantly changing the drag. Accordingly, by the solution disclosed herein, it may be achieved that the load asymmetry is reduced significantly without a significant reduction in the electrical power generation.

Furthermore, the load asymmetry may be reduced by the present solution without requiring additional pitch activation. Thereby, the accumulation of pitch bearing damage may be reduced. Further, the solution may also be suitable for larger rotor blades, as it is not required to make use of larger pitch bearings to account for the increased pitch activity, but similar pitch bearing sizes may be used for larger rotors. Furthermore, since the reduction of the load asymmetry is performed by the wind turbine itself, the requirement to perform a wake steering for upstream wind turbines is reduced significantly. Therefore, fatigue loading on upstream wind turbines may be reduced as well, and the annual energy production provided by such upstream wind turbines may be increased. Furthermore, performing such load asymmetry detection by the wind turbine may allow the reduction of the load asymmetry without any additional information on the inflow, such as information provided by a Lidar system or the like. Reducing the load asymmetry on the wind turbine rotor may thus be facilitated significantly.

The load asymmetry may in particular be caused by an asymmetry of the flow of air, such as by any of the above-mentioned phenomena, including partial wake of an upstream wind turbine, flow shear, low level jets, atmospheric gravitational wakes, and the like. The load asymmetry may in particular be caused by the flow of air through the rotor plane, i.e. the circular plane that is swept by the rotor blades. Preferably, an active aerodynamic device is provided on each rotor blade of the rotor and is controlled according to the disclosed solution. The rotor may have three rotor blades.

The load asymmetry may be detected directly (e.g. measuring of a load applied to the rotor or a component thereof) and/or indirectly (e.g. by detecting an asymmetry of the airflow to which the rotor is exposed). For example, detecting the load asymmetry may comprise detecting a load acting on the rotor or on a rotor support, in particular detecting a load acting on at least one of a rotor blade (one, two, or each rotor blade), a rotor blade support, a rotor hub, a rotor shaft, a rotor shaft bearing, or a rotor shaft support. The asymmetric load acting on the rotor is transferred to each of these components, so that it may be detected at each of these components.

Detecting the load asymmetry may for example comprise one or a combination of detecting a bending moment at a root or other location of the (or each) rotor blade, detecting a bending moment on a rotor shaft of the rotor, detecting a bending moment on a generator coupled to the rotor (e.g., of a direct drive generator), detecting a movement of a hub, of a tower, and/or of a nacelle of the wind turbine (e.g., using an inertial sensor for detecting acceleration), and detecting strain on a support of the rotor. Bending moments may for example be detected by measuring the strain with a strain gauge or the like, and calculating with help of calibration factors the corresponding bending moment. The bending moment can be detected by measuring the strain with help of optical devices such as a Fiber Bragg. Preferably, at least a bending moment on a rotor blade (e.g. flapwise bending moment at the root) and/or on the rotor shaft is detected, and any of the further measurements may or may not be used in addition. Reliable information of the load asymmetry may thus be obtained.

Detecting the load asymmetry may additionally comprise detecting or estimating a flow field of the flow of air. The detection may thus be made more precise, and changes to the load asymmetry may be anticipated by estimation of the flow field. Information from a Lidar or other inflow information may be used for the detection/estimation. It may be possible to estimate the flow field based on known wake conditions of the upstream wind turbine, wind measurements and the like.

In an embodiment, the detecting of the load asymmetry is based on N numbers of revolutions of the rotor. N is at least one, two, three, four, or five, and is preferably smaller than 10. N may thus be within the range of 1 to 10, e.g. from within the range of 1 to 5. Using at least one or two revolutions of the rotor for detecting the load asymmetry provides reliable information and ensures that sufficient data is available for making a precise estimation. Conventionally, it has been thought that any control of active aerodynamic devices has to occur quickly and thus on the basis of a parameter that is determined in a short time interval. Contrary to these reservations, it has been found that good and potentially even better results can be achieved by making use of the data collected over one, two or more revolutions of the rotor for detecting the load asymmetry. It has in particular been found that effects such as wake meandering or changes to the shear flow occur on a timescale that is generally longer than the rotational period of the wind turbine rotor, so that even though the detection of the load asymmetry occurs relatively slowly, the asymmetry and thus the fatigue loads can be reduced very efficiently.

The detecting of the load asymmetry may be performed continuously during the operation of the wind turbine. The detected load asymmetry may for example be updated continuously using the data from one, two, three, or more revolutions of the rotor, or may be updated every revolution or a multiple thereof. The measured parameter may be tracked during operation, and the flow asymmetry may be derived from data tracked over between 1-5 revolutions of the rotor.

Detecting the load asymmetry may comprise detecting an azimuthal angle in the rotor plane at which a load on the blades due to the flow of air has a maximum or minimum. In particular, an azimuthal angle of a center of loading of the rotor may be detected. By detecting such angle, which is herein also referred to as the phase ϕ, information is made available on the azimuthal position of the rotor blade at which the AAD needs to counteract most the load asymmetry. It should be clear that such angle is equivalent to a certain time offset during the rotational period of the rotor blade.

Further, a level of the load asymmetry may be detected. This may for example be detected by detecting a difference in the load at the detected azimuthal angle and the load at an angle opposite thereof (i.e. 180° thereof). The control of the AAD may use the detected azimuthal angle, and may optionally further use the level of the load asymmetry.

For example, detecting the azimuthal angle may comprise detecting a load variation on at least one of the rotor blades and estimating the azimuthal angle from the load variation. The detection can be carried out for only a single blade, which will experience a maximum load and a minimum load during one revolution, from which the respective azimuthal angle can be determined. To increase the precision of the determination, the load variation may be detected for 2, 3, or each of the rotor blades. A fast and efficient detection of the azimuthal angle of the center of loading may thus be achieved.

As another example, detecting the load asymmetry may comprise determining a yaw moment (e.g., an asymmetry of the load around a vertical axis) acting on the rotor due to the load asymmetry and/or determining a tilt moment (e.g., a load asymmetry around a horizontal axis) acting on the rotor due to the load asymmetry. From the detected yaw moment and the detected tilt moment, the above-mentioned azimuthal angle, and in particular the center of loading of the wind turbine rotor, may further be estimated. A quite precise and efficient detection of the load asymmetry may thereby be implemented.

For example, the load, and in particular a bending moment, may be detected for each rotor blade, and a transformation, such as Colemann-transformation (also known as a multi-blade transformation), may be applied to the detected parameters to derive the yaw moment and the tilt moment. Based on the relative amplitude of the yaw and tilt moments, or by a respective vector addition, the center of loading of the wind turbine rotor may be determined. Again, knowledge of the azimuthal angle (phase ϕ) of the center of loading may be used in the control of the AAD, in particular to activate the AAD at the desired azimuthal position of the respective blade to counteract the load asymmetry.

As an example, the controlling of the active aerodynamic device may comprise controlling the active aerodynamic device to reduce lift of the respective blade at an azimuthal position of the blade at which the aerodynamic load on the blade is increased (e.g., at a maximum) and/or controlling the active aerodynamic device to increase lift of the respective blade at an azimuthal position of the blade at which the aerodynamic load on the blade is decreased (e.g., at a minimum). By reducing lift at a high loading of the blade and increasing lift at a low loading of the blade, the aerodynamic load acting on the blade during a revolution of the rotor may be balanced. Thus, load asymmetry acting on the rotor may be reduced. It should be clear that this may be performed for each blade of the rotor.

In an exemplary implementation, controlling of the active aerodynamic device may comprise controlling a deflection of the active aerodynamic device based on an azimuthal position of the rotor blade. The deflection is preferably continuously changed during rotation of the rotor in accordance with the current azimuthal position of the blade. By providing such control based on the azimuthal position of the respective rotor blade, the lift may for example be increased continuously by continuously increasing the amount of deflection until the blade reaches the position of minimum load due to the flow asymmetry, so that the load on the blade can be kept almost constant over a revolution of the rotor. If the center of loading of the blade changes, this may be detected and the azimuthal position of maximum deflection and/or the amount of deflection of the AAD may be adjusted accordingly.

In an example, the amount of deflection may depend on the level of the load asymmetry. The deflection of the AAD may for example be increased for a higher level of load asymmetry. The compensation of the load asymmetry may thus be made more precise, and overcompensation may be avoided. It should be clear that the maximum deflection of the AAD during one revolution does not need to be the maximum (physically) possible deflection of the AAD, e.g. when compensating only a lower level of flow asymmetry.

As an example, the control of the AAD may occur in a feed-forward manner, based on the detected position (azimuthal angle) of the center of loading and optionally on the level of load asymmetry, and/or may occur in a feedback manner so as to minimize the load asymmetry.

As an example, the AAD may be controlled to have a first (maximum) deflection that provides a maximum lift coefficient for the blade at the azimuthal position of the blade at which the load on the blade is minimal, and/or may be controlled to have a second (minimal) deflection (which can be a negative deflection) that provides a minimum lift coefficient for the blade at the azimuthal position of that blade at which the load on the blade is maximal. Load asymmetry may thus be reduced efficiently.

The controlling of the active aerodynamic device may comprise the deriving of a control signal that is synchronous to the rotation of the rotor from the detected load asymmetry and applying the control signal to the active aerodynamic device. For a continuous operation of the AAD, such control signal may for example be similar or be a sinusoidal signal, which is synchronized to the rotor rotation such that the AAD is activated for maximum lift increase at minimum loading of the blade. The signal is thus essentially phase-shifted by the detected azimuthal angle of the load asymmetry (the time phase-shift corresponds to the detected azimuthal angle (radians) divided by the rotational frequency (radians/s)).

In particular, the AAD may be controlled to provide a variation of the lift coefficient of the respective blade that is in counter-phase to a variation of the aerodynamic load acting on the respective blade during rotation of the rotor.

In an embodiment, controlling the active aerodynamic device may further comprise compensating an activation delay of the active aerodynamic device. This may for example occur by providing an angular offset ΔΨ to an azimuthal angle that is indicative of the detected load asymmetry, in particular to the above described azimuthal angle (phase ϕ). Such angular offset ΔΨ corresponds to the time delay multiplied by the rotational frequency (in radians). It should be clear that correspondingly, a time offset may be provided in the control signal to compensate the activation delay of the active aerodynamic device. For example, the control signal that controls the active aerodynamic device may be advanced by the activation delay to provide such compensation. Such phase-shift or angular offset ΔΨ changes the azimuthal blade position at which the AAD is activated, for example to reach the AAD's maximum or minimum deflection at the position at which the blade load reaches its minimum or maximum value, respectively. The load asymmetry compensation may thus be made more precise and fatigue loads may be further reduced.

Controlling the active aerodynamic device may further comprise obtaining an operating parameter of the wind turbine and performing the controlling in dependence on the operating parameter. Such operating parameter may for example be one or a combination of wind speed, rotational speed of the rotor, power generated by the wind turbine, and pitch angle.

The controlling of the active aerodynamic device to change the aerodynamic load on the blade may be performed only if the load asymmetry is above a respective threshold and/or if an operating parameter of the wind turbine is above a respective threshold. If the level of the load asymmetry is for example below the threshold, the AAD may not be activated, thus reducing the amount of activations. The threshold of load asymmetry may be set so that it is low enough to result in acceptable fatigue damage. The operating parameter may be any of the above-mentioned operating parameters. For example, a threshold wind speed, a threshold rotational speed of the rotor, a threshold power, a threshold yaw and/or tilt moment, a threshold bending moment at a given location along the blade, and/or a threshold pitch angle may be employed. If the wind speed or rotational speed of the rotor is for example below the respective threshold, the load applied to the rotor may be rather low, so that compensation of the load asymmetry may not be necessary. By the use of respective thresholds, unnecessary high activation levels of the AAD may be avoided.

The AAD may comprise or may be at least one of a flap, a trailing edge flap, an active Gurney flap, an active spoiler, an airfoil shape modifying device, and an active vortex generator. Other known active aerodynamic devices may be employed as well.

According to a further aspect of the invention, a control system for controlling the operation of a wind turbine is provided. The wind turbine comprises a rotor with two or more rotor blades, wherein the control system is configured to detect a load asymmetry of a load acting on the rotor, the load being caused by a flow of air to which the rotor is exposed. The control system may be coupled to or comprise respective sensors, in particular for detecting the loads as outlined above. The control system is configured to control an active aerodynamic device provided on a rotor blade of the rotor to change an aerodynamic load applied to the rotor blade by the flow of air. The control system is further configured to perform any of the methods disclosed herein. By such control system. Advantages similar to the ones outlined further above may be achieved.

According to a further aspect of the invention, a wind turbine comprising a rotor with two or more rotor blades is provided. An active aerodynamic device is provided on a rotor blade of the rotor, preferably on each blade of the rotor. The (each) active aerodynamic device is configured to be controllable to change an aerodynamic load applied to the respective rotor blade. The wind turbine comprises a control system having any of the configurations described herein.

It is to be understood that the features mentioned above and those yet to be explained below can be used not only in the respective combinations indicated, but also in other combinations or in isolation, without leaving the scope of the present invention. In particular, the features of the different aspects and embodiments of the invention can be combined with each other unless noted to the contrary.

The control system or the wind turbine may in particular be configured to carry out any of the method steps described herein, and the method may be carried out by a control system or wind turbine having any of the configurations described herein.

### BRIEF DESCRIPTION OF THE DRAWINGS

The foregoing and other features and advantages of the invention will become further apparent from the following detailed description read in conjunction with the accompanying drawings. In the drawings, like reference numerals refer to like elements.
Figs. 1 and 2 are schematic drawings illustrating a load asymmetry on a rotor of a wind turbine and the detection thereof according to an embodiment.
Fig. 3 is a schematic drawing showing a wind turbine according to an embodiment.
Fig. 4 is a schematic drawing showing a control system of a wind turbine according to an embodiment.
Fig. 5 is a schematic drawing showing a control system of a wind turbine according to an embodiment.
Fig. 6 is a flow diagram illustrating a method of operating a wind turbine according to an embodiment.
Fig. 7 shows schematic diagrams illustrating the effect of operating an active aerodynamic device according to an embodiment.
Fig. 8 shows a schematic diagram illustrating the reduction of load asymmetry for a wind turbine rotor according to an embodiment.

### DETAILED DESCRIPTION

In the following, embodiments of the invention will be described in detail with reference to the accompanying drawings. It is to be understood that the following description of the embodiments is given only for the purpose of illustration and is not to be taken in a limiting sense. It should be noted that the drawings are to be regarded as being schematic representations only, and elements in the drawings are not necessarily to scale with each other. Rather, the representation of the various elements is chosen such that their function and general purpose become apparent to a person skilled in the art. As used herein, the singular forms "a," "an," and "the" are intended to include the plural forms as well, unless the context clearly indicates otherwise. The terms "comprising," "having," "including," and "containing" are to be construed as open-ended terms (i.e., meaning "including, but not limited to,") unless otherwise noted.

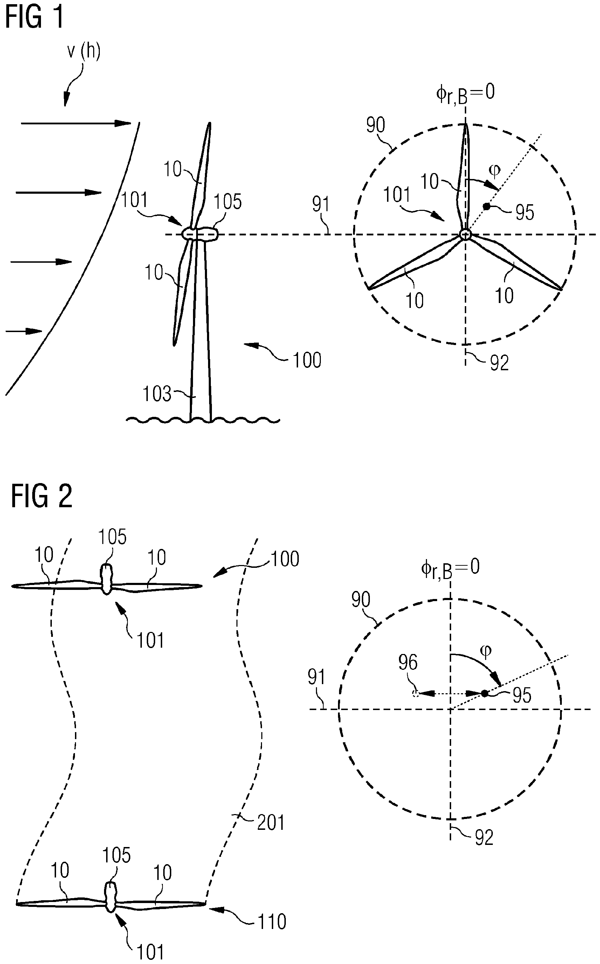

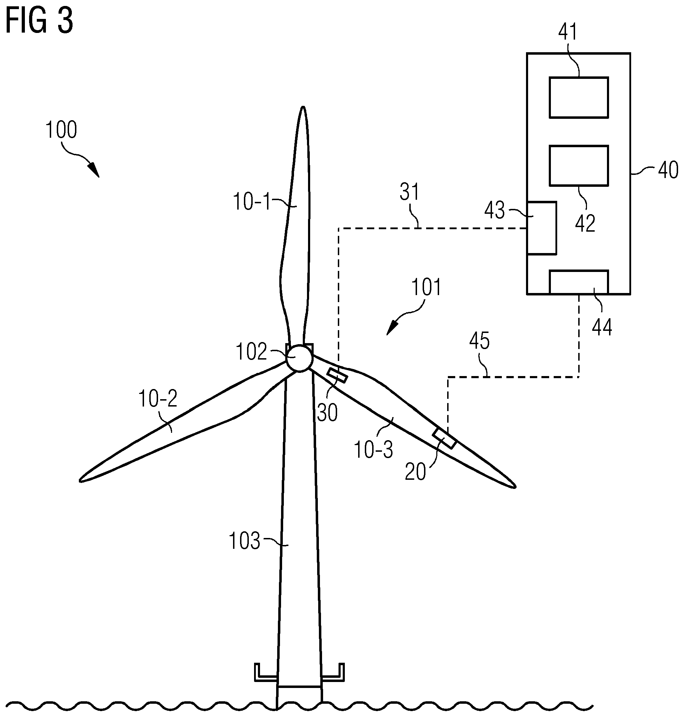

Fig. 1 schematically illustrates a load asymmetry applied to a rotor 101 of a wind turbine 100 by wind having a profile with high shear flow. Accordingly, the wind velocity v(h) changes significantly with height h above the sea surface (offshore wind turbine) or above ground. Rotor 101 includes rotor blades 10 (preferably three) and a hub 102 (Fig. 3). Rotor 101 is supported by nacelle 105, which is mounted on top of wind turbine tower 103. A yaw drive may be provided to change the orientation of nacelle 105 around a yaw axis.

On the right-hand side of Fig. 1, a front view of rotor 101 in the rotor plane is shown, wherein the rotor plane area swept by rotor blades 10 is indicated with reference numeral 90. 91 indicates the horizontal axis and 92 the vertical axis. If the flow of air is uniform across the rotor plane 90, the center of loading of rotor 101 due to the airflow would approximately coincide with the geometric center of the rotor. By the shear flow illustrated in Fig. 1, which is asymmetric with respect to the horizontal axis 91, the center of thrust and thus the center of loading 95 is shifted upwardly, as shown on the right side of Fig. 1. If the flow is further asymmetric with respect to the vertical axis 92 (e.g., due to wake or shadowing), the center of loading 95 (i.e. thrust eccentricity) will further shift sideways (in horizontal direction), as indicated in Fig. 1. The shifting of this center of loading 95 thus indicates the load asymmetry that acts on the rotor due to the flow of air.

Such shifted center of loading 95 may induce yaw and tilt moments around the vertical axis 92 and the horizontal axis 91, respectively. The load asymmetry may be detected by detecting the azimuthal angle ϕ, which describes the position of the center of loading (azimuthal angle ϕ may be measured in accordance with the applicable convention as shown in Fig. 1, or may be measured from any other reference). The level (or magnitude) of the load asymmetry may correspond to the distance of the loading center 95 from the center of the rotor 101. As the aerodynamic loading on a blade 10 is maximum as it passes the center of loading 95 (i.e. when the azimuthal angle of the blade φ_{r,B} = ϕ), then the aerodynamic loading of the blade is maximal. At a position on the opposite side of the hub (i.e. 180° from the center of loading 95), the aerodynamic loading of the blade is minimal. The level of load asymmetry may thus also be determined from the difference in the level of loading between these two positions of the blade. Further, since the center of loading 95 and thus the thrust eccentricity can be decomposed into the tilt and yaw moments, it is possible to determine the position of the center of loading, and thus the load asymmetry, by determining the tilt and yaw moments acting on rotor 101.

On the left-hand side of Fig. 2, a wake 201 of an upstream wind turbine 110 is illustrated, to which the downstream wind turbine 100 is exposed. Dynamic phenomena may occur in such situation, such as wake meandering, wherein the center of trust may shift slowly from one side of the rotor of the downstream wind turbine 100 to the other side. The center of loading 95 is illustrated in the rotor plane 90 on the right-hand side of Fig. 2 for the respective situation. The wake meandering may cause the center of loading 95 to shift to position 96. The position of the center of loading 95 may thus change continuously.

In particular in such situation, the flow field of the air may be difficult to determine. Further, due to the load asymmetry, in particular due to such partial wake, shear flow, or other flow asymmetry, the rotor 101 experiences a changing load having a strong 1P component, i.e. a load component with a frequency corresponding to the rotational frequency of the rotor (periodicity of one per revolution).

Embodiments of the solution disclosed herein detect the load asymmetry, in particular by detecting the azimuthal angle ϕ of the load asymmetry, and reduce the load asymmetry by activating an active aerodynamic device, preferably in counter-phase.

Fig. 3 illustrates an exemplary implementation, in which the active aerodynamic device (AAD) is a trailing edge flap 20 that can be deflected to increase lift or reduce lift of the respective blade 10. The AAD 20 may be controlled by a control system 40 that receives from a measuring unit 30, such as a strain gauge, a measurement signal 31. Control system 40 may comprise a processing unit 41 (e.g., a microprocessor, DSP, application-specific integrated circuit, or the like) and a memory 42, such as RAM, ROM, Flash Memory, or the like. Memory 42 may store control instructions, which, when executed by processing unit 41, may cause the control system 40 to perform any of the methods disclosed herein. Control system 40 may further include input/output interfaces 43, 44, and any other components commonly used in such control system. Based on measurements by measuring unit 30, control system 40 may generate a control signal 45 for controlling the AAD 20, as described in more detail herein below. AAD 20 is preferably provided on each blade of rotor 101 and each AAD is preferably individually controllable. Measuring unit 30 may be provided only on one blade, but is preferably provided on each blade, or on another component of rotor 101 or of a rotor support.

Measuring unit 30 may generate a load signal that is indicative of the aerodynamic loading of the respective blade 10. It may for example measure the bending moment at the root of the blade (e.g. by a respective strain measurement and derivation of the bending moment from the measured level of strain), or at another position along the blade 10. Other measurements may be used additionally or alternatively, such as measuring a bending moment on a shaft of the rotor 101 (e.g. for a geared turbine), or on a generator (e.g. of a direct drive turbine). Measuring unit 30 may further measure acceleration signals, for example from the hub 102, or from the top of tower 103 or nacelle 105. Due to the periodicity of the applied load, a load asymmetry can be detected by respective measurements.

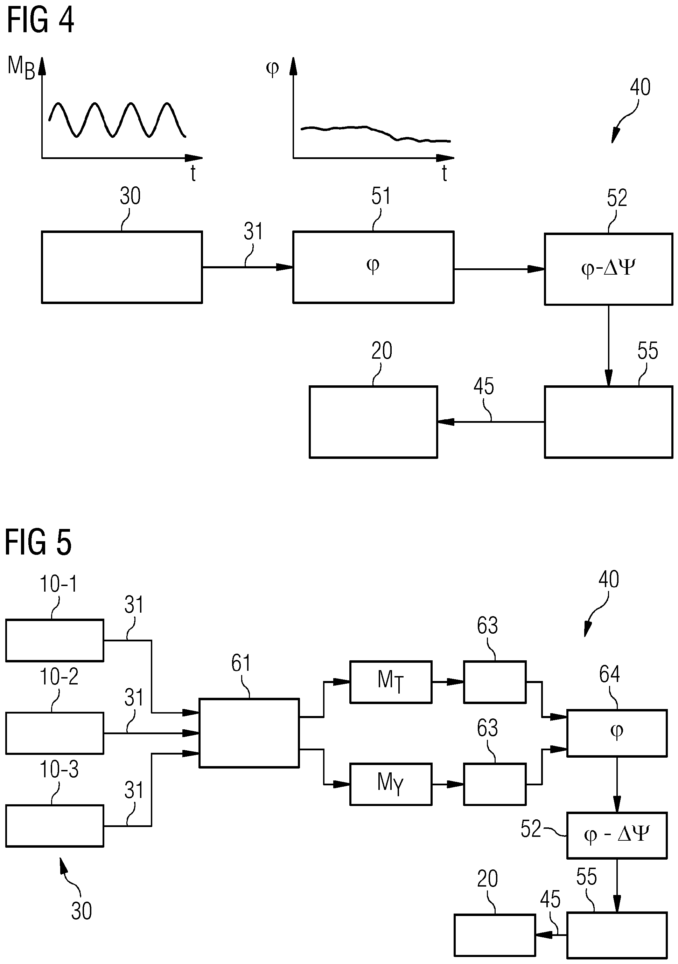

Fig. 4 is a schematic drawing showing an exemplary implementation of the control unit 40 of Fig. 3. Measurement unit 30 measures the bending moment of a blade M_{B} of one of the blades 10-1, 10-2, 10-3 (e.g. via a strain measurement). Signal processing may be performed as required, for example low-pass filtering of the signal in order to remove unwanted noise, or band-filtering in order to remove unwanted frequency components. A respective measurement curve is shown in Fig. 4 above the unit 30. The phase estimator 51 estimates the azimuthal angle ϕ (also termed "phase" herein) from the measurement signal 31. Since the angular position of the rotor blade is known, the position of the load asymmetry, in particular of the center of loading 95, may be identified from the measurement signal at the position of the highest bending moment. The diagram above phase estimator 51 exemplarily illustrates the change of phase ϕ over time, which may occur as explained above with respect to Figs. 1 and 2, e.g. due to wake meandering.

The AAD may have a certain response time, e.g. due to an activation delay, delays in the processing, delays due to the mechanical structure of the device and the like. Delay compensation unit 52 compensates the delay, for example by advancing the phase ϕ, for example by subtracting a respective angular offset ΔΨ. The correct timing of activating the AAD may thus be achieved. It is noted that since the rotational frequency of the rotor is known, such angle or angle difference can be translated into a respective phase or phase offset of the timing of the control.

Control signal generation unit 55 generates the control signal 45 in accordance with which the AAD 20 is controlled, based on the detected load asymmetry, in particular the corrected azimuthal angle provided by unit 52. If AAD 20 has only two activation states, such as activated and not activated, unit 55 may generate a respective binary control signal using the timing indicated by phase ϕ. Preferably, the AAD is controllable to continuously adjust the aerodynamic load on blade 10, for example by different amounts of deflection of a respective flap. Control signal generation unit 55 may thus generate a continuous control signal, that may be sinusoidal or the like. Using the determined (and optionally corrected) phase ϕ, the control signal is generated such that the change in aerodynamic load on the blade 10 is in counter-phase to the change in load on blade 10 caused by the load asymmetry. The asymmetry of the load acting on blade 10 can thus be reduced. For example, at the azimuthal angle of the blade 10 at which the load due to the asymmetric flow is maximal, AAD 20 may be controlled such that the lift is reduced by a maximum amount, and vice versa. With the changing angular position Ψ_{r,B} of the blade, the deflection of the AAD 20 may thus continuously be adjusted from a maximum value to a minimum value, e.g. to continuously change the lift coefficient and thus the lift acting on the blade to keep the aerodynamic load as constant as possible.

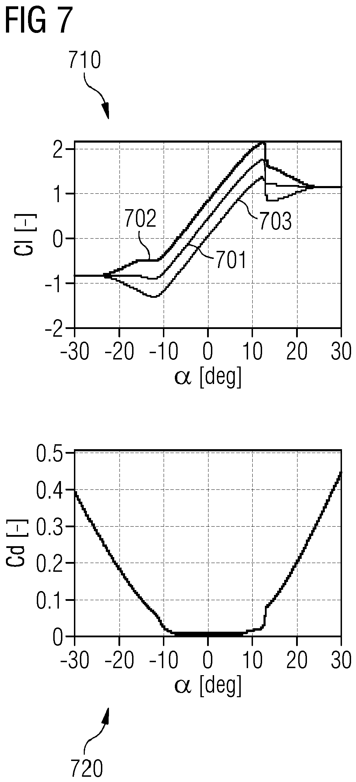

The aerodynamic effect of activating the AAD 20 is schematically illustrated in Fig. 7. The diagram 710 illustrates the lift coefficient Cl as a function of the angle of attack α. Curve 701 shows the lift coefficient with inactive AAD 20. When activating the AAD 20, e.g. positive deflection of the trailing edge flap, the lift coefficient increases as illustrated with curve 702. With negative deflection of the trailing edge flap, the lift coefficient is decreased as illustrated by curve 703. The aerodynamic load acting on blade 10 can thus be increased or reduced. Diagram 720 illustrates that for these three different activation states of the trailing edge flap, the drag coefficient Cd remains substantially unchanged (the three curves overlap and cannot be distinguished). The lift and thus the loading of the blade may thus be varied without significantly increasing drag. The AAD 20, and in particular a respective trailing edge flap, may thus allow a variation of the aerodynamic load acting on the blade without a significant loss in energy production.

Fig. 5 illustrates another exemplary implementation of the control system 40 of Fig. 3. In this example, the measurement unit 30 comprises a sensor for measuring the bending moment at the root of each blade 10-1, 10-2 and 10-3. The tilt/yaw moment determination unit 61 may calculate the tilt moment M_{T} and the yaw moment M_{Y} from the bending moments. A multi-blade transformation, such as the Colemann transformation, which transforms the time-varying bending moments from the rotating frame of the rotor into the stationary frame of the wind turbine, may be used. The tilt and yaw moments M_{T}, M_{Y} may optionally be filtered by a respective low-pass filter 63. As outlined above, from the proportions between the tilt and yaw moments, the azimuthal angle or phase ϕ may be estimated by the azimuthal angle estimator 64.

As explained with respect to Fig. 4, a compensation for an activation delay may again optionally be applied by unit 52, and the control signal generation unit 55 may generate the control signal 45 in accordance with which the AAD 20 is controlled.

Unit 51 of Fig. 4 or units 61 to 64 of Fig. 5 may thus implement a load asymmetry estimator. Besides estimating the azimuthal angle ϕ of the center of loading, the level of load asymmetry may likewise be estimated, as explained above. Unit 55 may generate the control signal so that the AAD 20 is for example deflected between a maximum possible deflection and a minimum possible deflection, or the degree of deflection may be determined in accordance with the level of load asymmetry. Unit 55 may for example implement a feed-forward control of the AAD 20, and/or may implement a feedback control that for example minimizes the load variation, e.g. by minimizing the measured bending moment variation, or by minimizing the tilt and yaw moments.

The detection of the load asymmetry and in particular the estimation of the center of loading 95 and optionally the level of load asymmetry may be based on at least one, two, or three revolutions of rotor 101, e.g. between 1 and 10 or between 1 and 5 revolutions. This becomes possible since the center of loading 95 will generally shift rather slowly from one position to another, in particular since the dynamics of the wake meandering are relatively slow. The rotor 101 may thus turn one, two, or more revolutions with a relatively steady load asymmetry. Accordingly, a relatively slow detection and control on a longer timescale become possible.

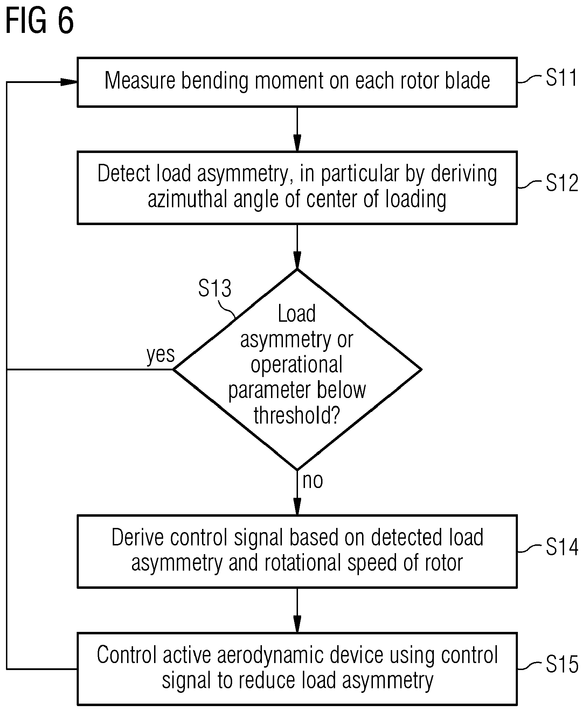

Fig. 6 shows a flow diagram of an exemplary implementation of the method. The method may be performed by the control system 40 of Fig. 3, which may be implemented as explained with respect to Fig. 4 or Fig. 5. In step S11, the bending moment is measured, preferably on each rotor blade. In step S12, the load asymmetry is detected, in particular by deriving the azimuthal angle of the center of loading, e.g. by means of unit 51 or 64.

Optionally, the activation of the AAD 20 may be made dependent on a condition. In step S13, it is checked if the level of the load asymmetry is below a respective threshold, and/or if an operational parameter of the wind turbine is below a respective threshold, such as a wind speed threshold, a power threshold, a pitch angle threshold, a rotation speed threshold or the like. In the affirmative, the method returns to step S11 and no activation of the AAD is performed. If the level of load asymmetry or the operational parameter is above the respective threshold, then the method continues in step S14, wherein the control signal is derived based on the detected load asymmetry and the rotational speed of the rotor, for example by means of unit 55. It should be clear that the compensation by unit 52 may optionally be performed. The active aerodynamic device 20 is then controlled by means of the generated control signal in step S15 to reduce the load asymmetry.

This can for example occur by the exemplary trailing edge flap which can be activated in counter-phase to the loading of the respective blade, wherein the control signal is generated to take into account the activation and deactivation time response of the trailing edge flap in form of the respective activation delay.

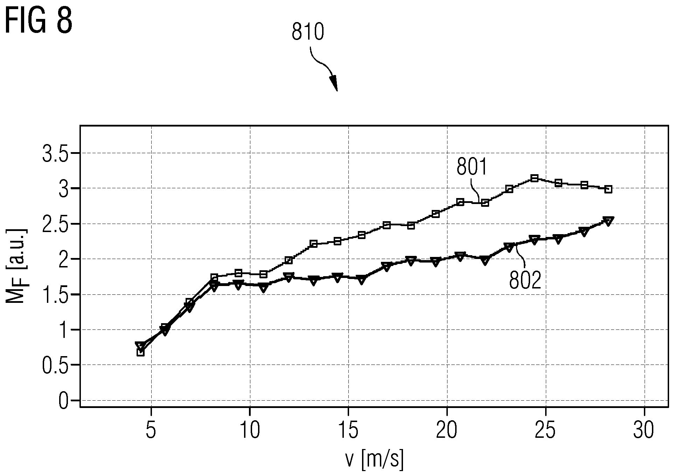

The diagram 810 of Fig. 8 illustrates the result of a respective operation of wind turbine 100. The example employs a trailing edge flap on each blade that is activated in counter-phase to the aerodynamic load applied to the blade. The curves were obtained by simulating different wind conditions, in particular different turbulence intensities, wherein 500 simulations for a ten minute time interval were performed. From the bending moments resulting on the blades, a fatigue equivalent load was calculated, in particular a root flapwise fatigue equivalent bending moment M_{F}. Diagram 810 shows this fatigue equivalent load M_{F}, which may also be termed "damage equivalent load", for the blade root as a function of the wind speed v. Curve 801 shows the fatigue equivalent load for a conventional wind turbine without a reduction of load asymmetry. When performing a load asymmetry detection based on the last two rotor revolutions and applying the method explained with respect to Fig. 5, in particular by controlling trailing edge flaps on each rotor blade in counter-phase to the respective blade loading, curve 802 is obtained. As can be seen, the fatigue equivalent load of the blade root can be reduced by about 15 to 25%, in particular at higher wind speeds at which the fatigue loads are higher. The fatigue loading of the blades and of other components of the wind turbine may thus be reduced significantly, and the lifetime may be prolonged. The diagram of Fig. 8 considers the Wöhler coefficient of the relevant material, in this case exemplarily for glass fiber reinforced materials, which are commonly employed for respective blades.

The methods and systems disclosed herein may thus allow the reduction of the load asymmetry without any additional pitch activation, thus reducing the risk of pitch bearing damage. The need to provide wake steering of upstream wind turbines is further reduced. The load asymmetry detection can be performed without requiring information on the inflow of air, although the method may be complemented with such information if it exists.

While specific embodiments are disclosed herein, various changes and modifications can be made without departing from the scope of the invention. The present embodiments are to be considered in all respects as illustrative and non-restrictive, and all changes coming within the meaning and equivalency range of the appended claims are intended to be embraced therein.

## Claims

1. A method of operating a wind turbine, wherein the wind turbine comprises a rotor (101) with two or more rotor blades (10), wherein the method comprises:
- detecting a load asymmetry of a load acting on the rotor (101), the load being caused by a flow of air to which the rotor (101) is exposed; and
- reducing the load asymmetry by controlling an active aerodynamic device (20), wherein the active aerodynamic device (20) is provided on a rotor blade (10) of the rotor (101), and wherein the active aerodynamic device (20) is controlled to change, based on the detected load asymmetry, an aerodynamic load applied to the rotor blade (10) by the flow of air to counteract the load asymmetry.

2. The method according to claim 1, wherein detecting the load asymmetry comprises detecting a load acting on the rotor (101) or a rotor support, in particular detecting a load acting on at least one of a rotor blade (10), a rotor blade support, a rotor hub (102), a rotor shaft, a rotor shaft bearing, or a rotor shaft support.

3. The method according to claim 1 or 2, wherein detecting the load asymmetry comprises one or a combination of detecting a bending moment at a root or other location of the rotor blade (10), detecting a bending moment on a rotor shaft of the rotor (101), detecting a bending moment on a generator coupled to the rotor (101), detecting a movement of a hub (102), of a tower (103) and/or of a nacelle (105) of the wind turbine (100), and detecting strain on a support of the rotor (101) .

4. The method according any of the preceding claims, wherein the detecting of the load asymmetry is based on N numbers of revolutions of the rotor (101), wherein N is at least 1, 2, 3, 4, or 5, wherein N is preferably smaller than 10.

5. The method according any of the preceding claims, wherein the detecting of the load asymmetry is performed continuously during the operation of the wind turbine (100).

6. The method according any of the preceding claims, wherein detecting the load asymmetry comprises detecting an azimuthal angle (ϕ) in the rotor plane (90) at which a load on the blade (10) due to the flow of air has a maximum or a minimum, in particular an azimuthal angle (ϕ) of a center of loading (95) of the rotor (101).

7. The method according to claim 6, wherein detecting the azimuthal angle (ϕ) comprises detecting a load variation on at least one of the rotor blades (10) and estimating the azimuthal angle (ϕ) from the load variation.

8. The method according any of the preceding claims, wherein detecting the load asymmetry comprises determining a yaw moment (M_{Y}) acting on the rotor (101) due to the load asymmetry and/or determining a tilt moment (M_{T}) acting on the rotor (101) due to the load asymmetry,
and preferably further comprises estimating a position of a center of loading (95) from the yaw moment (M_{Y}) and the tilt moment (M_{T}).

9. The method according any of the preceding claims, wherein the controlling of the active aerodynamic device (20) comprises controlling the active aerodynamic device to reduce lift of the respective blade (10) at an azimuthal position of the blade at which the aerodynamic load on the blade is increased and/or controlling the active aerodynamic device to increase lift of the respective blade at an azimuthal position of the blade at which the aerodynamic load on the blade is decreased.

10. The method according any of the preceding claims, wherein the controlling of the active aerodynamic device (20) comprises controlling a deflection of the active aerodynamic device based on an azimuthal position (φ_{r,B}) of the rotor blade (10), wherein the deflection is preferably continuously changed during rotation of the rotor (101) in accordance with the current azimuthal position of the blade (10).

11. The method according any of the preceding claims, wherein the controlling of the active aerodynamic device (20) comprises the deriving of a control signal (45) that is synchronized to the rotation of the rotor (101) from the detected load asymmetry and applying the control signal (45) to the active aerodynamic device (20).

12. The method according any of the preceding claims, wherein the controlling of the active aerodynamic device (20) comprises compensating an activation delay of the active aerodynamic device (20), preferably by providing an angular offset (Δψ) to an azimuthal angle (ϕ) that is indicative of the detected load asymmetry or by providing a time offset of the control.

13. The method according any of the preceding claims, wherein the controlling of the active aerodynamic device (20) to change the aerodynamic load on the blade (10) is performed only if the load asymmetry is above a respective threshold and/or if an operating parameter of the wind turbine (100) is above a respective threshold.

14. A control system for controlling the operation of a wind turbine, wherein the wind turbine (100) comprises a rotor (101) with two or more rotor blades (10), wherein the control system (40) is configured to detect a load asymmetry of a load acting on the rotor (101), the load being caused by a flow of air to which the rotor (101) is exposed, and is configured to control an active aerodynamic device (20) provided on a rotor blade (10) of the rotor (101) to change an aerodynamic load applied to the rotor blade (10) by the flow of air, wherein the control system (40) is further configured to perform the method according to any of the preceding claims.

15. A wind turbine comprising a rotor with two or more rotor blades (10) and an active aerodynamic device (20) provided on a rotor blade (10) of the rotor (101), the active aerodynamic device (20) being controllable to change an aerodynamic load applied to the respective rotor blade (10), wherein the wind turbine (100) comprises a control system (40) according to claim 14 to control the active aerodynamic device (20).
